# EUROPEAN PATENT APPLICATION

(11) **EP 4 656 027 A1**
(43) Date of publication of application: **03.12.2025**
(21) Application number: 25172778.0
(22) Date of filing: 28.04.2025
(51) Int. Cl.: A01D 34/00, A01G 20/30

(54) **ROBOTIC LAWN MOWER PARKING GARAGE WITH OPENABLE LID**

(30) Priority: 28.05.2024 SE 2450573
(71) Applicant: Husqvarna AB, 561 82 Huskvarna (SE)
(72) Inventor: Keblanz, Rolf, Huskvarna (SE)

(57) **Abstract**

The present disclosure relates to a robotic lawn mower parking garage (300) that comprises a lid part (311) having a longitudinal extension (E) that runs between a first end (325) and a second end (326), and at least two opposing wall parts (312, 313) extending between a bottom plane (305) and the lid part (311). The lid part (311) and the wall parts (312, 313) comprise two pairs of a closed hinge slot (314, 315) and a respective hinge pin (318, 319), where, for each pair, the hinge pin (318, 319) is adapted to move and pivot in the respective hinge slot (314, 315), between a first slot end (314A) and a second slot end (314B), when the lid part (311) is moved relative the wall parts (312, 313), around a pivot axis (810). The lid part (311) and the wall parts (312, 313) comprise locking means (316, 317, 320, 321; 710, 711) that are adapted to be released from a locking position, where the lid part (311) is prevented from pivoting around the pivot axis (810), to an open position, where the lid part (311) is admitted to pivot around the pivot axis (810) when the hinge pins (318, 319) bear on a second end (314B) of the respective hinge slot (314, 315), opposite the first end (314A).

## Description

### TECHNICAL FIELD

The present disclosure relates to a robotic lawn mower parking garage adapted to receive and house a robotic lawn mower. The parking garage comprises a lid part and at least two opposing wall parts that extend between a bottom plane and the lid part, where the bottom plane is adapted to face the ground.

### BACKGROUND

Automated or robotic work tools such as robotic lawn mowers are becoming increasingly more popular. In a typical deployment a work area, such as a garden, the work area can be enclosed by a boundary wire with the purpose of keeping the robotic lawn mower inside the work area. An electric control signal may be transmitted through the boundary wire thereby generating an (electro-) magnetic field emanating from the boundary wire. The robotic lawn mower is typically arranged with one or more sensors adapted to sense the control signal. Other types of navigation systems can be used instead of, or in combination with a boundary wire. Such navigation systems can for example be based on satellite navigation systems and/or local radio beacons or image processing such as Visual Simultaneous Localization and Mapping (VSLAM).

The robotic lawn mower can then cut grass on a user's lawn automatically and can be charged automatically without intervention of the user, and no longer needs to be manually managed after being set once. The robotic lawn mower typically comprises charging skids for contacting corresponding contact plates in a charging unit, generally constituted by an interaction station, when docking into the charging unit for receiving a charging current through, and possibly also for transferring information by means of electrical communication between the charging unit and the robotic lawn mower.

The charging unit is normally equipped with a lid part that provides environmental protection, for example from rain and sun, and also often accommodates the contact plates for making electrical contact with e charging skids of a docked robotic lawn mower. Sometimes it is desired for a user to open the lid, for example to obtain access to a docked robotic lawn mower or to obtain access to parts within the charging unit, for example for adjustment, replacement or cleaning.

The lid should, however, be locked such that for example strong wind does not open the lid. Previously known locking mechanisms typically add complexity and cost in terms of additional parts. This is exemplified in for example CN211353151U where there is a lid fastening member in the form of a metal spring sheet that is attached to a corresponding receiving portion, where a user is required to apply a certain external force to open the lid. This solution requires several additional parts that have to be mounted, easily brake and are worn out over time. Furthermore, the lid could open accidentally, for example due to strong wind.

There is a need to provide an improved robotic lawn mower parking garage with an openable lid that normally is securely locked, is easily openable, and does not require additional parts.

### SUMMARY

The object of the present disclosure is to provide an improved robotic lawn mower parking garage with an openable lid that normally is securely locked, is easily openable, and does not require additional parts.

This object is achieved by means of a robotic lawn mower parking garage adapted to receive and house a robotic lawn mower, where the parking garage comprises a lid part, having a longitudinal extension that runs between a first end and a second end, and at least two opposing wall parts that extend between a bottom plane and the lid part, where the bottom plane is adapted to face the ground. The lid part and the wall parts comprise two pairs of a closed hinge slot and a respective hinge pin, where, for each pair, the hinge pin is adapted to move and pivot in the respective hinge slot, between a first slot end and a second slot end, when the lid part is moved relative the wall parts, around a pivot axis. The lid part and the wall parts further comprise locking means that are adapted to be released from a locking position, where the lid part is prevented from pivoting around the pivot axis, to an open position, where the lid part is admitted to pivot around the pivot axis, when the hinge pins bear on the second slot end of the respective hinge slot, opposite the first slot end.

In this way, when closed, the lid part is locked such that the lid part needs to be displaced in order for it to be released and enable opening of the lid part.

According to some aspects, the lid part and the wall parts comprise locking means in the form of at least one pair of an open locking slot and a respective locking pin, where, for each pair, the locking pin is adapted to move along the respective locking slot when the lid part is moved relative the wall parts.

The slots present a corresponding smallest angle relative the bottom plane to prevent each of the at least one locking pin to exit the respective locking slot when the hinge pins bear on a first slot end of the respective hinge slot, and to admit each of the at least one locking pin to exit the respective locking slot via a respective slot opening when the hinge pins bear on a second slot end of the respective hinge slot, opposite the first slot end.

This means that when the hinge pins are in a first position, bearing against the respective first slot end, the locking pins are prevented from leaving the locking slot, and when the hinge pins are in a second position, bearing against the respective second slot end, the locking pins can leave the locking slot, and then the lid part can be opened pivoting via the hinge pins in the hinge slots. This way, the risk of an unwanted opening of the lid part is further reduced.

According to some aspects, the first slot end is positioned farther from the bottom plane than the second slot end. When the bottom plane faces the ground, this means that the first slot end is closer to the ground than the second slot end. This in turn means that the hinge pins normally will bear against the respective first slot end, the lid part normally being locked by means of the locking pins and being prevented from leaving the locking slot.

According to some aspects, the hinge slots present a smallest first angle to the bottom plane and the locking slots present a smallest second angle to the bottom plane, the angles extending in an opening direction of the lid part. This means that the angles increase when the lid part is opened.

According to some aspects, at least one locking slot comprises a locking indent that is adapted to locally reduce a locking slot width. Assuming that the corresponding locking pin has a diameter that is close to but not exceeds the locking slot width, this means that when a user again pulls the lid part, the user will have to overcome a retaining force that is conferred by means of the locking indent. In this way, the risk of an unwanted opening of the lid part is further reduced.

According to some aspects, the robotic lawn mower parking garage further comprises at least one support surface that is positioned adjacent a corresponding locking slot and presents a smallest third angle to the bottom plane, where the third angle is parallel to, and opposite to, the first angle and the second angle. This means that when closing the lid part, the locking pins will be guided downwards into the respective locking slots, facilitating the closing of the lid part.

According to some aspects, the wall parts are connected by a support rod. This provides an increase stability to the parking garage.

According to some aspects, the lid part comprises two mutually opposing closed hinge slots and each wall part comprises a corresponding hinge pin, the hinge pins being mutually opposing, protruding away from each other and being adapted to move and pivot in the respective hinge slot. Furthermore, each wall part comprises a corresponding open locking slot, and the lid part comprises two mutually opposing locking pins that protrude towards each other and are adapted to move along the respective locking slot. This constitutes one example of pin and slot configuration that is easily assembled.

According to some aspects, the lid part and the wall parts comprise locking means in the form of at least one pair of a protrusion element and a protrusion engagement member. For each pair, the protrusion element is released from the protrusion engagement member when the hinge pins bear on a second slot end of the respective hinge slot. This provides an alternative solution to the locking pins and the locking slots, where the risk of an unwanted opening of the lid part reduced in the same efficient manner.

According to some aspects, the engagement member is attached to the support rod and the protrusion element is comprised in the lid part.

According to some aspects, the robotic lawn mower parking garage further comprises a bottom part, where the wall parts extend between the bottom part and the lid part. The bottom part can for example be used for obtaining a larger contact surface towards ground, or as a means for attaching the parking garage to the charging unit.

The present disclosure also relates to robotic lawn mower interaction stations associated with the above advantages.

### BRIEF DESCRIPTION OF THE DRAWINGS

The present disclosure will now be described more in detail with reference to the appended drawings, where:
- Figure 1A: shows a perspective side view of a robotic lawn mower;
- Figure 1B: shows a schematic overview of the robotic lawn mower;
- Figure 2A: shows a schematic side view of a charging unit with a robotic lawn mower;
- Figure 2B: shows a schematic top view of Figure 2A;
- Figure 3A: shows a schematic side view of a robotic lawn mower in a parking garage with closed lid part according to a first example;
- Figure 3B: shows a schematic partially cut-open side view of the parking garage of Figure 3A;
- Figure 4A: shows a schematic perspective side view of the parking garage with the lid part in a first position according to the first example;
- Figure 4B: shows a schematic partially cut-open side view of the parking garage of Figure 4A;
- Figure 5A: shows a schematic perspective side view of the parking garage with the lid part in a second position according to the first example;
- Figure 5B: shows a schematic partially cut-open side view of the parking garage of Figure 5A;
- Figure 6: shows a schematic perspective top view of the parking garage with the lid part in a third completely opened position according to the first example;
- Figure 7: shows a schematic perspective top view of the parking garage with the lid part in a third completely opened position according to a second example; and
- Figure 8A-8B: show schematic perspective top views of the parking garage with the lid part in different positions along its longitudinal extension.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

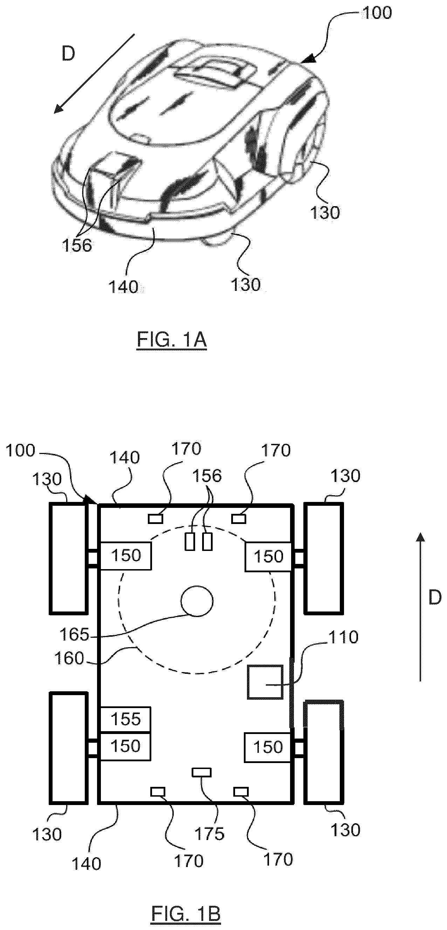

Figure 1A shows a perspective view of an example robotic lawn mower 100 and Figure 1B shows a schematic overview of the robotic lawn mower 100. According to some aspects, the robotic lawn mower 100 is adapted for a forward travelling direction D, has a main body 140 and a plurality of wheels 130; in this example the robotic lawn mower 100 has four wheels 130, two front wheels and two rear wheels. The robotic lawn mower 100 comprises a control unit 110 and at least one electric motor 150, where at least some of the wheels 130 are drivably connected to at least one electric motor 150. It should be noted that even if the description herein is focused on electric motors, combustion engines may alternatively be used in combination with an electric motor arrangement. The robotic lawn mower 100 may be a multi-chassis type or a mono-chassis type. A multi-chassis type comprises two or more body parts that are movable with respect to one another. A mono-chassis type comprises only one main body part.

In this example embodiment, the robotic lawn mower 100 is of a mono-chassis type, having a main body part 140. The main body part 140 substantially houses all components of the robotic lawn mower 100.

The robotic lawn mower 100 also comprises a grass cutting device 160, such as a rotating blade or a disc 160 with a plurality of separate rotating blades driven by a cutter motor 165. The robotic lawn mower 100 also has at least one rechargeable electric power source such as a battery 155 for providing power to the electric motor arrangement 150 and/or the cutter motor 165.

According to some aspects, the robotic lawn mower 100 may further comprise at least one navigation arrangement 175 in a previously known manner, for example comprising a satellite navigation sensor in the form of a GPS (Global Positioning System) device or other Global Navigation Satellite System (GNSS) device, according to some aspects for example using Real Time Kinematic (RTK).

According to some aspects, the robotic lawn mower 100 further comprises at least one environment detection device 170. In this example, radar transceivers 170 are provided and adapted to transmit signals and to receive reflected signals in a previously well-known manner. To enable this, according to some aspects, each radar transceiver 170 comprises a corresponding transmitter arrangement and receiver arrangement together with other necessary circuitry in a well-known manner.

For this purpose, the control unit 110 is adapted to control the environment detection device 170 and to control the speed and direction of the robotic lawn mower 100 in dependence of information acquired by means of the of the environment detection device 170 when the robotic lawn mower 100 is moving.

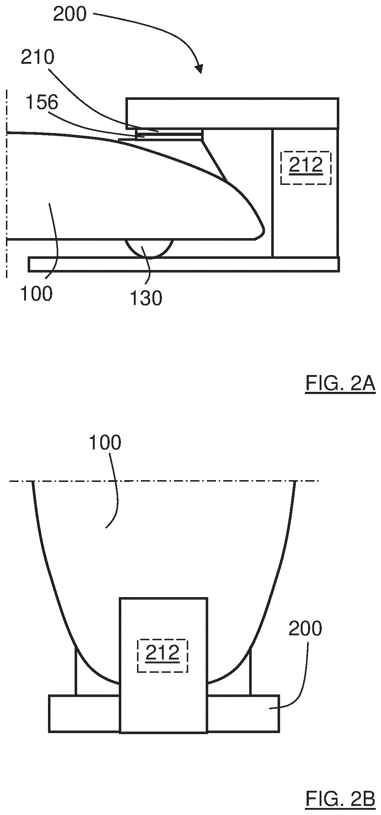

With reference to Figure 2A and Figure 2B that show a side view and a corresponding top view of a robotic lawn mower charging unit 200 and the robotic lawn mower 100, the charging unit 200 comprises a charger control unit 222 and a charging transmission arrangement 210. The robotic lawn mower 100 comprises a rechargeable electric power source 155 such as a battery 155 and a charging reception arrangement 156, such as for example charging skids, adapted for making electrical contact with the charging transmission arrangement 210 such that charging of the battery 155 is enabled. This means that the charging transmission arrangement 210 is adapted to transfer a charging current to the charging reception arrangement 156.

The battery 155 is thus arranged to be charged by means of received charging current from the charging unit 200, received through charging skids 156 or other suitable charging connectors that generally are constituted by the charging reception arrangement 156. Inductive charging without galvanic contact, only by means of electric contact, is also conceivable.

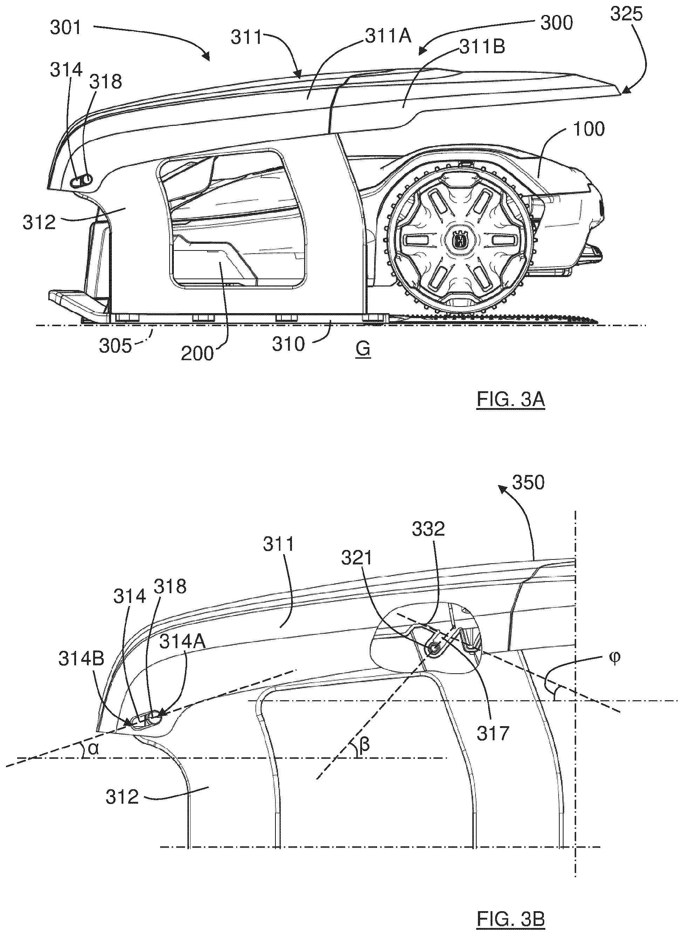

Figure 3A shows a robotic lawn mower in a robotic lawn mower interaction station 301 that comprises the charging unit 200 according to the above and a robotic lawn mower parking garage 300.

An aspect of the present disclosure relates to the robotic lawn mower parking garage 300, which will now be described more in detail with refence also to Figure 3B, Figure 4A, Figure 4B, Figure 5A, Figure 5B and Figure 6. It should be understood that Figure 3B, Figure 4B and Figure 5B show partially cut-open side views of the parking garage 300, such that and opposing part of the parking garage 300 is shown.

The robotic lawn mower parking garage 300 is adapted to receive and house a robotic lawn mower 100, and comprises a lid part 311, having a longitudinal extension E that runs between a first end 325 and a second end 326, and at least two opposing wall parts 312, 313 that extend between a bottom plane 305 and the lid part 311, where the bottom plane 305 is adapted to face the ground G.

According to some aspects, the bottom plane 305 coincides with a bottom side of the parking garage 300, and the bottom plane 305 is adapted to face the ground G when the parking garage 300 is deployed.

The lid part 311 and the wall parts 312, 313 comprise two pairs of a closed hinge slot 314, 315 and a respective hinge pin 318, 319. For each pair, the hinge pin 318, 319 is adapted to move and pivot in the respective hinge slot 314, 315, between a first slot end 314A and a second slot end 314B, when the lid part 311 is moved relative the wall parts 312, 313, around a pivot axis 810. This means that for one pair of a closed hinge slot 314, 315 and a respective hinge pin 318, 319, either the closed hinge slot is positioned at the lid part 311 and the hinge pin is positioned at a wall part 312, 313, or the closed hinge slot is positioned at a wall part 312, 313 and the hinge pin is positioned at the lid part 311. According to some aspects, the longitudinal extension E runs perpendicular to the pivot axis 810.

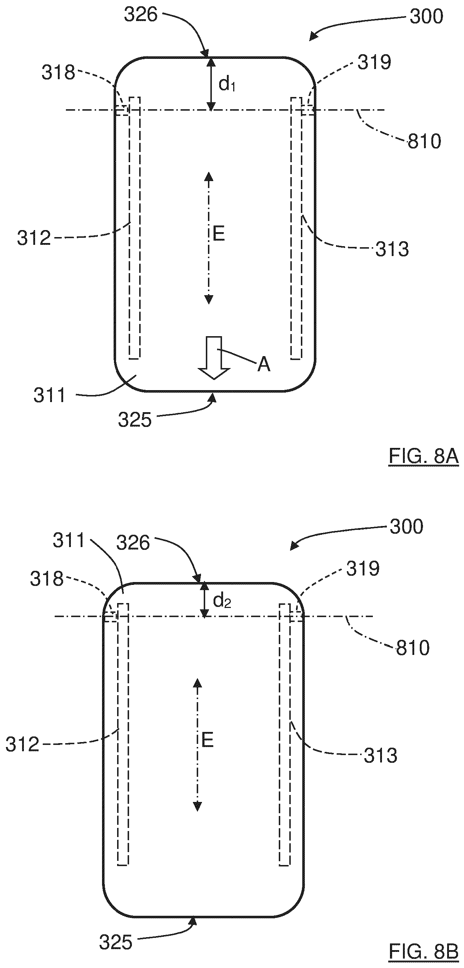

With reference also to Figure 8A and Figure 8B, the lid part 311 and the wall parts 312, 313 further comprise locking means 316, 317, 320, 321; 710, 711 (not shown in Figure 8a and Figure 8B) that are adapted to be released from a locking position, where the lid part 311 is prevented from pivoting around the pivot axis 810, to an open position, where the lid part 311 is admitted to pivot around the pivot axis 810, when the hinge pins 318, 319 bear on the second slot end 314B of the respective hinge slot 314, 315, opposite the first slot end 314A.

In the illustrated examples, the closed hinge slots are positioned at the lid part 311 and the and the hinge pins are positioned at the wall parts 312, 313. This for example illustrated in Figure 8A and Figure 8B that show how a first distance d₁ between the pivot axis 810 and the second end 326 is reduced to a second distance d₂ when the lid part 311 is moved along the longitudinal extension E in a direction indicated by an arrow A in Figure 8A. This is normally due to a user pulling in at the first end 325 in the direction of the arrow A, normally towards himself or herself.

In this way, when closed, the lid part 311 is locked in such that the lid part 311 in this example needs to be displaced such that the pivot axis 810 is brought closer to the second end 326 in order for it to be released and enable opening of the lid part 311. Should instead the closed hinge slots be positioned at the wall parts 312, 313, and the hinge pins be positioned at the lid part 311, the pivot axis 810 is moved away from the second end 326 in order for the lid part 311 to be released and enable opening of the lid part 311. Generally, when closed, the lid part 311 is locked such that the lid part 311 needs to be displaced such that the pivot axis 810 is moved relative the ends 325, 326 in order for the lid part 311 to be released and enable opening of the lid part 311.

In Figure 8A and Figure 8B, the locking means are not indicated, two examples of locking means will be provided in the following.

According to a first example, with reference to Figure 3B, Figure 4A, Figure 4B, Figure 5A, Figure 5B and Figure 6, the lid part 311 and the wall parts 312, 313 also comprise locking means in the form of at least one pair of an open locking slot 316, 317 and a respective locking pin 320, 321. This means that there is at least one locking slot 316, 317 and at least one corresponding locking pin 320, 321. For each pair, the locking pin 320, 321 is adapted to move along the respective locking slot 316, 317 when the lid part 311 is moved relative the wall parts 312, 313. This means that for one pair of an open locking slot 316, 317 and a respective locking pin 320, 321, either the open locking slot is positioned at the lid part 311 and the locking pin is positioned at a wall part 312, 313, or the open locking slot is positioned at a wall part 312, 313 and the locking pin is positioned at the lid part 311. As shown in the illustrated examples and according to some aspects, there are two pair of an open locking slot 316, 317 and a respective locking pin 320, 321.

As shown in the illustrated examples and according to some aspects, the closed hinge slots 314, 315 and the locking pins 320, 321 are positioned at the lid part 311, and the open locking slots 316, 317 and the hinge pins 318, 319 are positioned at the wall parts 312, 313. More in detail, according to some aspects, the lid part 311 comprises two mutually opposing closed hinge slots 314, 315 and each wall part 312, 313 comprises a corresponding hinge pin 318, 319, the hinge pins 318, 319 being mutually opposing, protruding away from each other and being adapted to move and pivot in the respective hinge slot 314, 315. Furthermore, each wall part 312, 313 comprises a corresponding open locking slot 316, 317, and the lid part 311 comprises two mutually opposing locking pins 320, 321 that protrude towards each other and are adapted to move along the respective locking slot 316, 317. Other configuration alternatives are of course possible where pins and corresponding slots can change place between lid part and wall parts. According to some aspects, in the case where two respective pins protrude away from each other, they can be formed as one common detail such as a supporting rod with integrated pins.

The slots 314, 315, 316, 317 present a corresponding smallest angle α, β relative the bottom plane 305 to prevent each of the at least one locking pin 320, 321 from exiting the respective locking slot 316, 317 when the hinge pins 318, 319 bear on a first slot end 314A of the respective hinge slot 314, and to admit each of the at least one locking pin 320, 321 to exit the respective locking slot 316, 317 via a respective slot opening 317B when the hinge pins 318, 319 bear on a second slot end 314B of the respective hinge slot 314, 315, opposite the first slot end 314A.

This means that when the hinge pins 318, 319 are in a first position, bearing against the respective first slot end 314A, the locking pins 320, 321 are prevented from leaving the locking slot 316, 317, and when the hinge pins 318, 319 are in a second position, bearing against the respective second slot end 314B, the locking pins 320, 321 can leave the locking slot 316, 317, and then the lid part can be opened pivoting via the hinge pins 318, 319 in the hinge slots 314, 315.

According to some aspects, the first slot end 314A is positioned farther from the bottom plane 305 than the second slot end 314B. When the bottom plane 305 faces the ground G, this means that the first slot end 314A is closer to the ground G than the second slot end 314B. This in turn means that the hinge pins 318, 319 normally will bear against the respective first slot end 314A, the lid part 311 normally being locked by means of the locking pins 320, 321 being prevented from leaving the locking slot 316, 317.

According to some aspects, the hinge slots 314, 315 present a smallest first angle α to the bottom plane 305 and where the locking slots 316, 317 present a smallest second angle β to the bottom plane 305, the angles α, β extending in an opening direction 350 of the lid part 311. This means that the angles α, β increase when the lid part 311 is opened.

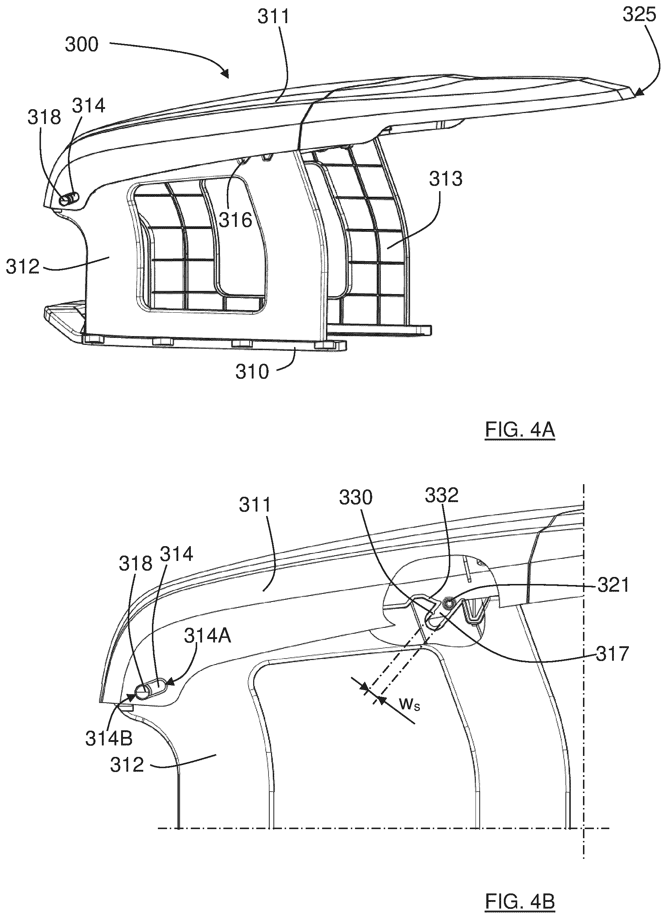

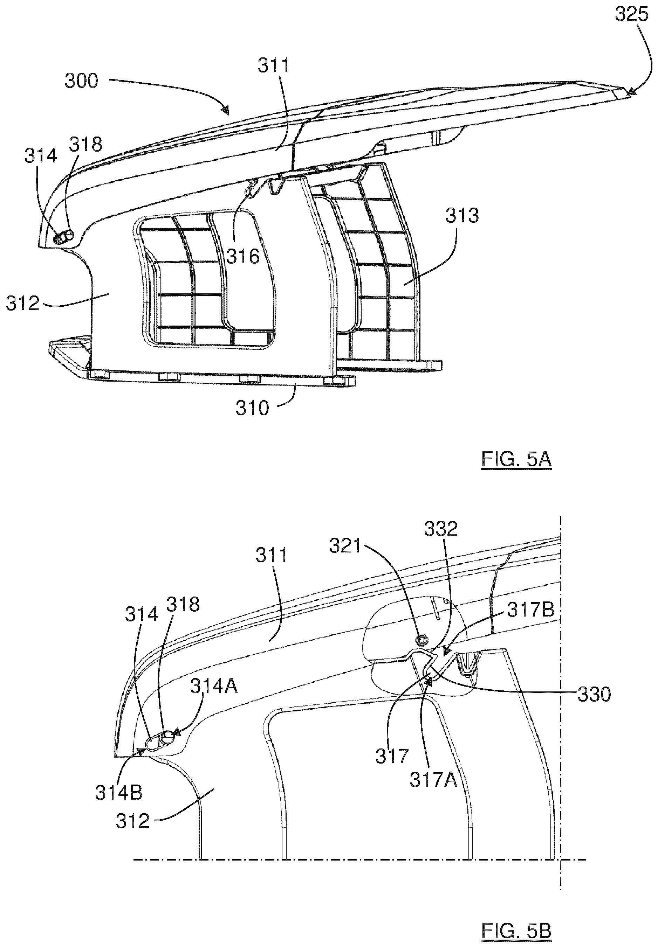

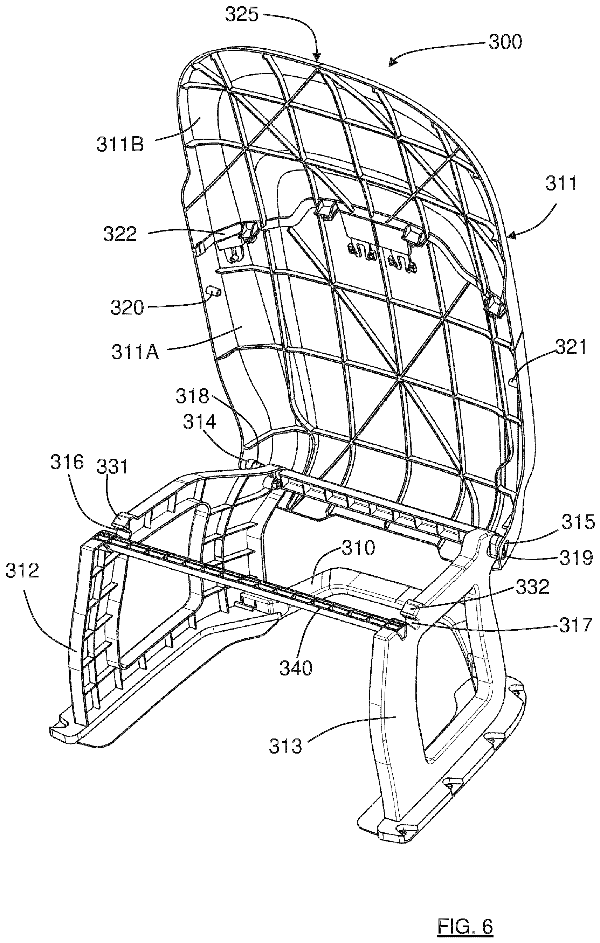

For the above configuration, a use example will be described in the following, with reference to Figure 8A and Figure 8B. A user who stands at the first end 325 of the lid part 311 that is farthest from the hinge slots 314, 315 and the hinge pins 318, 319, and wants to open the lid part 311, has to slightly pull the lid part 311 in the directions of the arrow A, normally towards himself or herself. This is illustrated in Figure 3A, Figure 3B, Figure 4A and Figure 4B. Then the hinge pins 318, 319 are moved from the first position to the second position, now bearing against the respective second slot end 314B. Then the locking pins 320, 321 can leave the locking slots 316, 317 as shown in Figure 5A and Figure 5B, and then the lid part can be opened pivoting via the hinge pins 318, 319 in the hinge slots 314, 315 as shown in Figure 6. When the locking pins 320, 321 have left the locking slots 316, 317 as shown in Figure 5, the lid part 311 will slide back such that the hinge pins 318, 319 will pivot and bear against the respective first slot end 314A as shown in Figure 5A and Figure 5B, and will remain bearing against the respective first slot end 314A during the opening of the lid part 311.

When closing the lid part 311, the user will lower the lid part 311 and again slightly pull the lid part 311 towards himself or herself such that the hinge pins 318, 319 are moved from the first position to the second position, now bearing against the respective second slot end 314B. This admits the locking pins 320, 321 to enter the locking slots 316, 317 as shown in Figure 4A and Figure 4B. The lid part 311 can now be released and the locking pins 320, 321 will fall down in the respective locking slots 316, 317, and the hinge pins 318, 319 will bear against the respective first slot end 314A as shown in Figure 3A and Figure 3B. The lid part is now locked until a user again pulls the lid part 311 as described above, and until then the lid part 311 will be secured against an unwanted opening that for example may be due to strong wind.

According to some aspects, the first angle α lies in the interval 20°-40°, and the second angle β lies in the interval 35°-55°.

According to some aspects, at least one locking slot 316, 317 comprises a locking indent 330 that is adapted to locally reduce a locking slot width wₛ. Assuming that the corresponding locking pin has a diameter that is close to but not exceeds the locking slot width wₛ, this means that when a user again pulls the lid part 311 as described above, the user will have to overcome a retaining force that is conferred by means of the locking indent 330, see Figure 4B and Figure 5B. In this way, the risk of an unwanted opening of the lid part 311 is further reduced.

According to some aspects, and as in particular shown in Figure 3B, the robotic lawn mower parking garage 300 further comprises at least one support surface 331, 332 that is positioned adjacent a corresponding locking slot 316, 317 and presents a smallest third angle φ to the bottom plane 305, where the third angle φ is parallel to, and opposite to, the first angle α and the second angle β. This means that when closing the lid part 311, the locking pins 320, 321 will be guided downwards into the respective locking slots 316, 317, facilitating the closing of the lid part 311.

According to some aspects, and as in particular shown in Figure 6, the wall parts 312, 313 are connected by a support rod 340. This provides an increase stability to the parking garage 300.

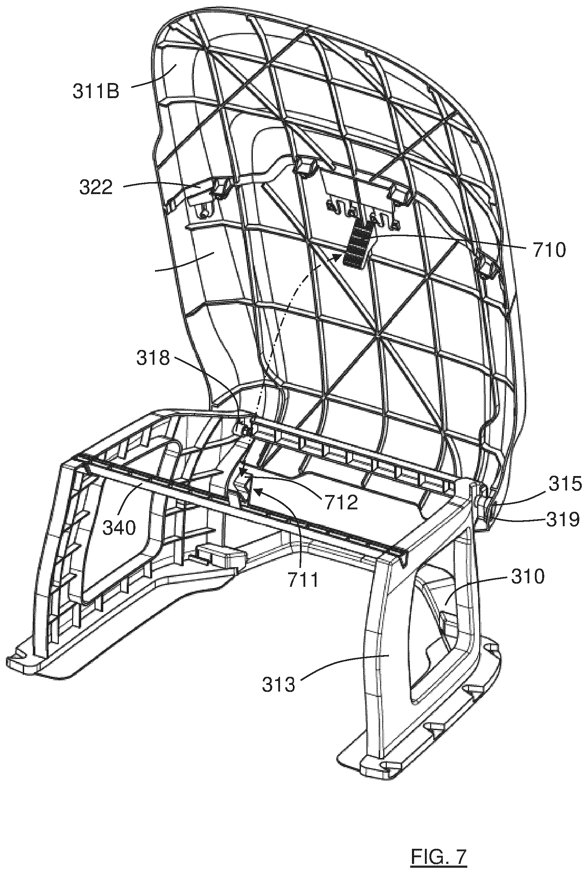

According to a second example, with reference to Figure 7, the lid part 311 and the wall parts 312, 313 comprise locking means in the form of at least one pair of a protrusion element 710 and a protrusion engagement member 711, where, for each pair, the protrusion element 710 is released from the protrusion engagement member 711 when the hinge pins 318, 319 bear on a second slot end 314B of the respective hinge slot 314, 315, opposite the first slot end 314A. This provides an alternative solution to the locking pins and the locking slots according to the first example, where the risk of an unwanted opening of the lid part 311 is reduced in the same efficient manner.

According to some aspects, as shown in Figure 7, the engagement member 711 is attached to the support rod 340 as shown in Figure 7, and the protrusion element 710 is comprised in the lid part 311. The opposite is of course possible, and there may be more than one pair of a protrusion element 710 and a protrusion engagement member 711.

When the lid part 311 is closed, the protrusion element 710 is locked to the protrusion engagement member 711. When a user pulls at the first end 325 in the direction of the arrow A, the pivot pins 318, 319 move in the pivot slots 314, 315 as described above, the protrusion element 710 is released from the protrusion engagement member 711 and then the lid part 311 can be opened pivoting via the hinge pins 318, 319 in the hinge slots 314, 315 as shown in Figure 7. Then the lid part 311 will slide back such that the hinge pins 318, 319 will pivot and bear against the respective first slot end 314A as described for the first example.

When closing the lid part 311, the user will lower the lid part 311 and possibly again slightly pull the lid part 311 in the direction of the arrow A such that the hinge pins 318, 319 are moved from the first position to the second position, now bearing against the respective second slot end 314B. This admits the protrusion element 710 to engage the protrusion engagement member 711. The protrusion element 710 and the protrusion engagement member 711 can be formed such that the user does not need to slightly pull the lid part 311 in the direction of the arrow A, but the protrusion element 710 will slide on the protrusion engagement member 711, for example on an inclined surface 712 comprised in the protrusion engagement member 711, such that the lid part 311 moves in the direction of the arrow A, enabling the protrusion element 710 to engage the protrusion engagement member 711.

The lid part 311 is now locked until a user again pulls the lid part 311 as described above, and until then the lid part 311 will be secured against an unwanted opening that for example may be due to strong wind. The movement of the protrusion element 710 to and from the protrusion engagement member 711, when closing and opening the lid part 311, is indicated by a dashed-dotted arrow in Figure 7.

According to some aspects, and as in particular shown in Figure 3A, Figure 4A, Figure 5A and Figure 6, the robotic lawn mower parking garage 300 further comprises a bottom part 310, where the wall parts 312, 313 extend between the bottom part 310 and the lid part 311. In this case the bottom plane 305 of the parking garage 300 is positioned just beneath the bottom part 310 when deployed. Otherwise, in case the wall parts 312, 313 are adapted to face the ground G directly, the bottom plane 305 of the parking garage 300 is positioned just beneath the wall parts 312, 313 when deployed.

The bottom part 310 can for example be used for obtaining a larger contact surface towards ground, or as a means for attaching the parking garage 300 to the charging unit 200.

The present disclosure also relates to the robotic lawn mower interaction station 301 as described previously, and when the parking garage 300 is mounted to the charging unit 200, the bottom plane 305 may face the ground G but do not need to be in direct contact with the ground G, but instead rest against a part of the charging unit 200.

The present disclosure is not limited to the above, but may vary freely whin the scope of the appended claims. For example, the respective pins can be integrated with the corresponding lid part 311 and/or wall part 312, 313, or be constituted by separate parts that are mounted to the rest of the corresponding lid part 311 and/or wall part 312, 313.

According to some aspects, and as in particular shown in Figure 6, the lid part 311 comprises a first lid sub-part 311A and a second lid sub-part 311B, where the lid sub-parts 311A, 311B are attached to each other along a mounting interface 322. In this way, the unmounted parking garage 300 does not need to comprise any relatively large parts, which facilitates packaging, storing and shipping of the parking garage 300, where the lid sub-parts 311A, 311B are attached to each other during mounting of the parking garage 300.

## Claims

1. A robotic lawn mower parking garage (300) adapted to receive and house a robotic lawn mower (100), where the parking garage (300) comprises a lid part (311), having a longitudinal extension (E) that runs between a first end (325) and a second end (326), and at least two opposing wall parts (312, 313) that extend between a bottom plane (305) and the lid part (311), where the bottom plane (305) is adapted to face the ground (G), wherein the lid part (311) and the wall parts (312, 313) comprise
- two pairs of a closed hinge slot (314, 315) and a respective hinge pin (318, 319), where, for each pair, the hinge pin (318, 319) is adapted to move and pivot in the respective hinge slot (314, 315), between a first slot end (314A) and a second slot end (314B), when the lid part (311) is moved relative the wall parts (312, 313), around a pivot axis (810),
- locking means (316, 317, 320, 321; 710, 711) that are adapted to be released from a locking position, where the lid part (311) is prevented from pivoting around the pivot axis (810), to an open position, where the lid part (311) is admitted to pivot around the pivot axis (810), when the hinge pins (318, 319) bear on the second slot end (314B) of the respective hinge slot (314, 315), opposite the first slot end (314A).

2. The robotic lawn mower parking garage (300) according to claim 1, wherein the lid part (311) and the wall parts (312, 313) comprise locking means in the form of
- at least one pair of an open locking slot (316, 317) and a respective locking pin (320, 321), where, for each pair, the locking pin (320, 321) is adapted to move along the respective locking slot (316, 317) when the lid part (311) is moved relative the wall parts (312, 313),
the slots (314, 315, 316, 317) presenting a corresponding smallest angle (α, β) relative the bottom plane (305) to prevent each of the at least one locking pin (320, 321) from exiting the respective locking slot (316, 317) when the hinge pins (318, 319) bear on a first slot end (314A) of the respective hinge slot (314), and to admit each of the at least one locking pin (320, 321) to exit the respective locking slot (316, 317) via a respective slot opening (317B) when the hinge pins (318, 319) bear on a second slot end (314B) of the respective hinge slot (314, 315), opposite the first slot end (314A).

3. The robotic lawn mower parking garage (300) according to any one of the claims 1 or 2, wherein the first slot end (314A) is positioned farther from the bottom plane (305) than the second slot end (314B).

4. The robotic lawn mower parking garage (300) according to any one of the previous claims, wherein the hinge slots (314, 315) present a smallest first angle (α) to the bottom plane (305) and where said locking slots (316, 317) present a smallest second angle (β) to the bottom plane (305), the angles (α, β) extending in an opening direction (350) of the lid part (311).

5. The robotic lawn mower parking garage (300) according to claim 4, wherein the first angle (α) lies in the interval 20°-40°, and the second angle (β) lies in the interval 35°-55°.

6. The robotic lawn mower parking garage (300) according to any one of the previous claims, wherein at least one locking slot (316, 317) comprises a locking indent (330) that is adapted to locally reduce a locking slot width (wₛ).

7. The robotic lawn mower parking garage (300) according to any one of the previous claims, further comprising at least one support surface (331, 332) that is positioned adjacent a corresponding locking slot (316, 317) and presents a smallest third angle (φ) to the bottom plane (305), where the third angle (φ) is parallel to, and opposite to, the first angle (α) and the second angle (β).

8. The robotic lawn mower parking garage (300) according to any one of the previous claims, wherein the lid part (311) comprises two mutually opposing closed hinge slots (314, 315) and each wall part (312, 313) comprises a corresponding hinge pin (318, 319), the hinge pins (318, 319) being mutually opposing, protruding away from each other and being adapted to move and pivot in the respective hinge slot (314, 315), and wherein each wall part (312, 313) comprises a corresponding open locking slot (316, 317), and the lid part (311) comprises two mutually opposing locking pins (320, 321) that protrude towards each other and are adapted to move along the respective locking slot (316, 317).

9. The robotic lawn mower parking garage (300) according to claim 1, wherein the lid part (311) and the wall parts (312, 313) comprise locking means in the form of at least one pair of a protrusion element (710) and a protrusion engagement member (711), where, for each pair, the protrusion element (710) is released from the protrusion engagement member (711) when t the hinge pins (318, 319) bear on the second slot end (314B) of the respective hinge slot (314, 315).

10. The robotic lawn mower parking garage (300) according to any one of the previous claims, wherein the wall parts (312, 313) are connected by a support rod (340).

11. The robotic lawn mower parking garage (300) according to claim 10 dependent on claim 9, wherein the protrusion engagement member (711) is attached to the support rod (340) and the protrusion element (710) is comprised in the lid part (311).

12. The robotic lawn mower parking garage (300) according to any one of the previous claims, further comprising a bottom part (310), where the wall parts (312, 313) extend between the bottom part (310) and the lid part (311).

13. The robotic lawn mower parking garage (300) according to any one of the previous claims, wherein the longitudinal extension (E) runs perpendicular to the pivot axis (810).

14. A robotic lawn mower interaction station (301) that comprises the robotic lawn mower parking garage (300) according to any one of the previous claims and a charging unit (200), where the charging unit (200) comprises a charging control unit (212) and a charging transmission arrangement (210) that is adapted to provide a charge current, to a charging reception arrangement (156) of an outdoor robotic lawn mower(100).
